# EUROPEAN PATENT APPLICATION

(11) **EP 4 848 788 A1**
(43) Date of publication of application: **02.12.2026**
(21) Application number: 25744433.1
(22) Date of filing: 06.01.2025
(51) Int. Cl.: H04W 24/08

(54) **MDT MEASUREMENT COLLECTION METHOD, MDT CONFIGURATION METHOD, DEVICE, APPARATUS AND STORAGE MEDIUM**

(30) Priority: 26.01.2024 CN 202410115926
(71) Applicant: Datang Mobile Communications Equipment Co., Ltd., Beijing 100085 (CN)
(72) Inventor: YAN, Nan, Beijing 100085 (CN); XU, Meng, Beijing 100085 (CN)
(74) Representative: Studio Torta S.p.A.
(86) International application number: PCT/CN2025/070832
(87) International publication number: WO 2025/156988

(57) **Abstract**

The present disclosure provides an MDT measurement collection method, a configuration method, a device, an apparatus, and a storage medium. The MDT measurement collection method includes: receiving, by a terminal, MDT configuration information sent by a network device, where the MDT configuration information includes restriction information for MDT measurement collection, and the restriction information includes at least one of cell type restriction information, area restriction information, or time restriction information; and performing MDT measurement collection based on the MDT configuration information.

## Description

### CROSS-REFERENCES TO RELATED APPLICATIONS

The present application claims priority to Chinese patent application No. 202410115926.9, filed on January 26, 2024 and entitled "MDT MEASUREMENT COLLECTION METHOD, CONFIGURATION METHOD, DEVICE, APPARATUS AND STORAGE MEDIUM", which is hereby incorporated by reference in its entirety.

### TECHNICAL FIELD

The present disclosure relates to the field of wireless communication technologies and, in particular, to an MDT measurement collection method, a configuration method, a device, an apparatus and a storage medium.

### BACKGROUND

A restriction range in minimization of drive test (Minimization Drive Test, MDT) configuration is divided into three levels, namely, a network level (the network includes a public land mobile network (Public Land Mobile Network, PLMN) and/or a standalone non-public network (Standalone Non-Public Network, SNPN)), a tracking area (Tracking Area, TA) level, and a cell (cell) level. Adopting such MDT configuration solution is not conducive for operators to collect MDT results in a targeted manner, and may cause waste of power consumption overhead during MDT measurement collection performed by the terminal (also referred to as user equipment, User Equipment, UE).

### SUMMARY

In view of the problems in the related art, the present disclosure provides an MDT measurement collection method, a configuration method, a device, an apparatus, and a storage medium.

In a first aspect, the present disclosure provides a minimization of drive test MDT measurement collection method, applied to a terminal, including:
receiving MDT configuration information sent by a network device, where the MDT configuration information includes restriction information for MDT measurement collection, and the restriction information includes at least one of cell type restriction information, area restriction information, or time restriction information;
performing MDT measurement collection based on the MDT configuration information.

In some embodiments, the cell type restriction information includes one or more of the following indication information:
first indication information, where the first indication information is used to indicate that the terminal measures and collects MDT data of a terrestrial network TN cell and/or a non-terrestrial network NTN cell;
second indication information, where the second indication information is used to indicate whether the terminal is allowed to measure and collect MDT data of the NTN cell in a case where the terminal camps on or is connected to the TN cell;
third indication information, where the third indication information is used to indicate whether the terminal is allowed to measure and collect MDT data of the TN cell in a case where the terminal camps on or is connected to the NTN cell.

In some embodiments, the area restriction information includes one or more of the following:
a TN area identifier;
a restricted area list;
restricted frequency point information.

In some embodiments, each entry in the restricted area list includes a reference point parameter and a radius parameter; or, each entry in the restricted area list includes a logical identifier mapped to a fixed area.

In some embodiments, the restricted frequency point information is common restricted frequency point information for performing MDT measurement collection for a serving cell and performing MDT measurement collection for a neighboring cell; or,
the restricted frequency point information includes restricted frequency point information configured for performing MDT measurement collection for the serving cell, and/or restricted frequency point information configured for performing MDT measurement collection for the neighboring cell.

In some embodiments, the time restriction information includes any one of the following:
deadline information for measurement collection;
start time information for measurement collection and the deadline information for measurement collection;
the start time information for measurement collection and duration information for measurement collection.

In some embodiments, the restriction information is one or more sets of restriction information, each set of the restriction information is associated with one or more cells, or each set of the restriction information is associated with one or more tracking areas, or each set of the restriction information is associated with one or more networks.

In some embodiments, the method further includes:
reporting an MDT measurement collection report, where the MDT measurement collection report includes one or more of the following:
a type of a serving cell of the terminal when collecting an MDT result;
a satellite identifier of a serving satellite of the terminal when collecting the MDT result;
geographic location information of the terminal when collecting the MDT result;
the MDT configuration information;
a result obtained by the terminal through calculation based on the MDT configuration information.

In a second aspect, the present disclosure further provides a minimization of drive test MDT configuration method, applied to a network device, including:
sending MDT configuration information to a terminal, where the MDT configuration information includes restriction information for MDT measurement collection, and the restriction information includes at least one of cell type restriction information, area restriction information, or time restriction information.

In some embodiments, the cell type restriction information includes one or more of the following indication information:
first indication information, where the first indication information is used to indicate that the terminal measures and collects MDT data of a terrestrial network TN cell and/or a non-terrestrial network NTN cell;
second indication information, where the second indication information is used to indicate whether the terminal is allowed to measure and collect MDT data of the NTN cell in a case where the terminal camps on or is connected to the TN cell;
third indication information, where the third indication information is used to indicate whether the terminal is allowed to measure and collect MDT data of the TN cell in a case where the terminal camps on or is connected to the NTN cell.

In some embodiments, the area restriction information includes one or more of the following:
a TN area identifier;
a restricted area list;
restricted frequency point information.

In some embodiments, each entry in the restricted area list includes a reference point parameter and a radius parameter; or, each entry in the restricted area list includes a logical identifier mapped to a fixed area.

In some embodiments, the restricted frequency point information is common restricted frequency point information for performing MDT measurement collection for a serving cell and performing MDT measurement collection for a neighboring cell; or,
the restricted frequency point information includes restricted frequency point information configured for performing MDT measurement collection for the serving cell, and/or restricted frequency point information configured for performing MDT measurement collection for the neighboring cell.

In some embodiments, the time restriction information includes any one of the following:
deadline information for measurement collection;
start time information for measurement collection and the deadline information for measurement collection;
the start time information for measurement collection and duration information for measurement collection.

In some embodiments, the restriction information is one or more sets of restriction information, each set of the restriction information is associated with one or more cells, or each set of the restriction information is associated with one or more tracking areas, or each set of the restriction information is associated with one or more networks.

In some embodiments, the method further includes:
receiving an MDT measurement collection report sent by the terminal, where the MDT measurement collection report includes one or more of the following:
a type of a serving cell of the terminal when collecting an MDT result;
a satellite identifier of a serving satellite of the terminal when collecting the MDT result;
geographic location information of the terminal when collecting the MDT result;
the MDT configuration information;
a result obtained by the terminal through calculation based on the MDT configuration information.

In a third aspect, the present disclosure further provides a terminal, including a memory, a transceiver, and a processor:
the memory is configured to store a computer program; the transceiver is configured to transmit and receive data under control of the processor; the processor is configured to read the computer program in the memory and perform the following operations:
receiving MDT configuration information sent by a network device, where the MDT configuration information includes restriction information for MDT measurement collection, and the restriction information includes at least one of cell type restriction information, area restriction information, or time restriction information;
performing MDT measurement collection based on the MDT configuration information.

In some embodiments, the cell type restriction information includes one or more of the following indication information:
first indication information, where the first indication information is used to indicate that the terminal measures and collects MDT data of a terrestrial network TN cell and/or a non-terrestrial network NTN cell;
second indication information, where the second indication information is used to indicate whether the terminal is allowed to measure and collect MDT data of the NTN cell in a case where the terminal camps on or is connected to the TN cell;
third indication information, where the third indication information is used to indicate whether the terminal is allowed to measure and collect MDT data of the TN cell in a case where the terminal camps on or is connected to the NTN cell.

In some embodiments, the area restriction information includes one or more of the following:
a TN area identifier;
a restricted area list;
restricted frequency point information.

In some embodiments, each entry in the restricted area list includes a reference point parameter and a radius parameter; or, each entry in the restricted area list includes a logical identifier mapped to a fixed area.

In some embodiments, the restricted frequency point information is common restricted frequency point information for performing MDT measurement collection for a serving cell and performing MDT measurement collection for a neighboring cell; or,
the restricted frequency point information includes restricted frequency point information configured for performing MDT measurement collection for the serving cell, and/or restricted frequency point information configured for performing MDT measurement collection for the neighboring cell.

In some embodiments, the time restriction information includes any one of the following:
deadline information for measurement collection;
start time information for measurement collection and the deadline information for measurement collection;
the start time information for measurement collection and duration information for measurement collection.

In some embodiments, the restriction information is one or more sets of restriction information, each set of the restriction information is associated with one or more cells, or each set of the restriction information is associated with one or more tracking areas, or each set of the restriction information is associated with one or more networks.

In some embodiments, the operations further include:
reporting an MDT measurement collection report, where the MDT measurement collection report includes one or more of the following:
a type of a serving cell of the terminal when collecting an MDT result;
a satellite identifier of a serving satellite of the terminal when collecting the MDT result;
geographic location information of the terminal when collecting the MDT result;
the MDT configuration information;
a result obtained by the terminal through calculation based on the MDT configuration information.

In a fourth aspect, the present disclosure further provides a network device, including a memory, a transceiver, and a processor:
the memory is configured to store a computer program; the transceiver is configured to transmit and receive data under control of the processor; the processor is configured to read the computer program in the memory and perform the following operations:
sending MDT configuration information to a terminal, where the MDT configuration information includes restriction information for MDT measurement collection, and the restriction information includes at least one of cell type restriction information, area restriction information, or time restriction information.

In some embodiments, the cell type restriction information includes one or more of the following indication information:
first indication information, where the first indication information is used to indicate that the terminal measures and collects MDT data of a terrestrial network TN cell and/or a non-terrestrial network NTN cell;
second indication information, where the second indication information is used to indicate whether the terminal is allowed to measure and collect MDT data of the NTN cell in a case where the terminal camps on or is connected to the TN cell;
third indication information, where the third indication information is used to indicate whether the terminal is allowed to measure and collect MDT data of the TN cell in a case where the terminal camps on or is connected to the NTN cell.

In some embodiments, the area restriction information includes one or more of the following:
a TN area identifier;
a restricted area list;
restricted frequency point information.

In some embodiments, each entry in the restricted area list includes a reference point parameter and a radius parameter; or, each entry in the restricted area list includes a logical identifier mapped to a fixed area.

In some embodiments, the restricted frequency point information is common restricted frequency point information for performing MDT measurement collection for a serving cell and performing MDT measurement collection for a neighboring cell; or,
the restricted frequency point information includes restricted frequency point information configured for performing MDT measurement collection for the serving cell, and/or restricted frequency point information configured for performing MDT measurement collection for the neighboring cell.

In some embodiments, the time restriction information includes any one of the following:
deadline information for measurement collection;
start time information for measurement collection and the deadline information for measurement collection;
the start time information for measurement collection and duration information for measurement collection.

In some embodiments, the restriction information is one or more sets of restriction information, each set of the restriction information is associated with one or more cells, or each set of the restriction information is associated with one or more tracking areas, or each set of the restriction information is associated with one or more networks.

In some embodiments, the operations further include:
receiving an MDT measurement collection report sent by the terminal, where the MDT measurement collection report includes one or more of the following:
a type of a serving cell of the terminal when collecting an MDT result;
a satellite identifier of a serving satellite of the terminal when collecting the MDT result;
geographic location information of the terminal when collecting the MDT result;
the MDT configuration information;
a result obtained by the terminal through calculation based on the MDT configuration information.

In a fifth aspect, the present disclosure further provides a minimization of drive test MDT measurement collection apparatus, including:
a first receiving unit, configured to receive MDT configuration information sent by a network device, where the MDT configuration information includes restriction information for MDT measurement collection, and the restriction information includes at least one of cell type restriction information, area restriction information, or time restriction information;
a measurement collection unit, configured to perform MDT measurement collection based on the MDT configuration information.

In a sixth aspect, the present disclosure further provides a minimization of drive test MDT configuration apparatus, including:
a sending unit, configured to send MDT configuration information to a terminal, where the MDT configuration information includes restriction information for MDT measurement collection, and the restriction information includes at least one of cell type restriction information, area restriction information, or time restriction information.

In a seventh aspect, the present disclosure further provides a non-transitory readable storage medium, where the non-transitory readable storage medium stores a computer program, and the computer program is configured to cause a processor to execute the MDT measurement collection method according to the first aspect, or execute the MDT configuration method according to the second aspect.

In an eighth aspect, the present disclosure further provides a communication device, where the communication device stores a computer program, and the computer program is configured to cause the communication device to execute the MDT measurement collection method according to the first aspect, or execute the MDT configuration method according to the second aspect.

In a ninth aspect, the present disclosure further provides a processor-readable storage medium, where the processor-readable storage medium stores a computer program, and the computer program is configured to cause a processor to execute the MDT measurement collection method according to the first aspect, or execute the MDT configuration method according to the second aspect.

In a tenth aspect, the present disclosure further provides a chip product, where the chip product stores a computer program, and the computer program is configured to cause the chip product to execute the MDT measurement collection method according to the first aspect, or execute the MDT configuration method according to the second aspect.

According to the MDT measurement collection method, the configuration method, the device, the apparatus, and the storage medium provided by the present disclosure, by carrying at least one of the cell type restriction information, the area restriction information, or the time restriction information for MDT measurement collection in the MDT configuration information, a range for the terminal to perform MDT measurement collection can be configured in a targeted manner, thereby improving the flexibility of MDT measurement collection, and reducing unnecessary terminal power consumption.

### BRIEF DESCRIPTION OF THE DRAWINGS

In order to explain technical solutions in the present disclosure or in the related art more clearly, drawings required to be used in the description of embodiments or the related art will be introduced briefly in the following. It is obvious that the drawings in the following description are some embodiments of the present disclosure. For those of ordinary skill in the art, other drawings may also be obtained according to these drawings without creative efforts.
FIG. 1 is a schematic flowchart of an MDT measurement collection method provided by an embodiment of the present disclosure.
FIG. 2 is a schematic flowchart of an MDT configuration method provided by an embodiment of the present disclosure.
FIG. 3 is a schematic structural diagram of a terminal provided by an embodiment of the present disclosure.
FIG. 4 is a schematic structural diagram of a network device provided by an embodiment of the present disclosure.
FIG. 5 is a schematic structural diagram of an MDT measurement collection apparatus provided by an embodiment of the present disclosure.
FIG. 6 is a schematic structural diagram of an MDT configuration apparatus provided by an embodiment of the present disclosure.

### DESCRIPTION OF EMBODIMENTS

In the embodiments of the present disclosure, the term "and/or" describes an association relationship of associated objects, and means that there may be three types of relationships. For example, A and/or B may represent three situations, namely, A exists alone, A and B exist at the same time, and B exists alone. The character "/" generally means that the associated objects before and after the character are of an "or" relationship.

In the embodiments of the present disclosure, the term "multiple" refers to two or more, and other quantifiers are similar.

In the embodiments of the present disclosure, the terms "first", "second", and the like are used to distinguish similar objects rather than describe a specific order or sequence. It should be understood that the terms so used are interchangeable under appropriate circumstances, such that the embodiments of the present disclosure can be implemented in sequences other than those illustrated or described herein. Furthermore, objects distinguished by "first" and "second" are generally of a single category, and the number of objects is not limited, for example, a first object may be one or more first objects.

The technical solutions in the embodiments of the present disclosure are clearly and completely described in the following with reference to the accompanying drawings in the embodiments of the present disclosure. Obviously, the described embodiments are merely some rather than all of the embodiments of the present disclosure. All other embodiments obtained by those of ordinary skill in the art without creative efforts based on the embodiments of the present disclosure fall within the protection scope of the present disclosure.

To facilitate a clearer understanding of the technical solutions of various embodiments of the present disclosure, some technical content related to the embodiments of the present disclosure is first introduced.

### 1. MDT Measurement Collection Reporting of UE

MDT measurement collection reporting of a UE includes two types: immediate MDT (Immediate MDT) measurement collection reporting, and logged MDT (Logged MDT) measurement collection reporting. Both types of MDT measurement collection reporting are configured, managed, and delivered by a network side.

After configuration information for Immediate MDT measurement collection reporting is delivered to a base station node, radio resource management (Radio Resource Management, RRM) measurement configuration and reporting procedures are reused over an air interface. The UE receives relevant MDT measurement configuration information in a radio resource control (Radio Resource Control, RRC) reconfiguration message, and reports a measurement result to a base station side immediately after completing measurement result collection.

After configuration information for Logged MDT measurement collection reporting is delivered to the base station node, the configuration information is delivered to the UE over the air interface using a LoggedMeasurementConfiguration (logged measurement configuration) message. The UE starts measurement logging only after entering an idle state or an inactive state, and stores logged results at a UE side. After the UE returns to a connected state, the UE has an opportunity to indicate to a network side that relevant logged MDT results are stored, and then sends them to the network side.

From another dimension, MDT measurement collection reporting of the UE may further be classified into two usages: signalling based MDT (Signalling based MDT) measurement collection reporting, and management based MDT (Management based MDT) measurement collection reporting.

Signalling based MDT measurement collection reporting is used to track signal conditions of a single UE. Its MDT configuration is forwarded layer by layer by an operator through core network nodes. In a new radio (New Radio, NR) system, the MDT configuration is transmitted to the base station side through core network nodes such as a unified data management (Unified Data Management, UDM) and an access and mobility management function (Access and Mobility Management Function, AMF). For logged MDT measurement collection reporting, the base station sends MDT configuration information to the UE, and the UE performs measurement collection subsequently, and then reports the same. For immediate MDT measurement collection reporting, the base station sends partial information related to UE measurement in the MDT configuration to the UE.

Management based MDT measurement collection reporting is used to collect overall signal conditions within a certain area coverage. Its MDT configuration is directly sent by the operator to an involved base station side. According to MDT configuration information, the base station side may select some or all UEs to perform relevant MDT data measurement collection. For Logged MDT measurement collection reporting, the base station sends the MDT configuration information to selected UEs, which perform measurement collection subsequently and report the same. For Immediate MDT measurement collection reporting, the base station sends partial information related to UE measurement in the MDT configuration to the UE.

### 2. Area Restriction for MDT Configuration

MDT configuration includes area restriction information for MDT measurement collection of the UE. For Signalling based MDT measurement collection reporting, the area restriction information may be carried in an interface signaling transmitted to the base station through a core network node and in air interface configuration for Signalling based logged MDT (signalling based logged MDT) measurement collection reporting. For Management based MDT measurement collection reporting, the area restriction information is not transmitted through the core network node, and the area restriction information may be carried in air interface configuration for Management based logged MDT (management based logged MDT) measurement collection reporting.

Area restriction contents of the MDT configuration include the following:
a. restriction information for a serving cell where the UE is located. For example, the UE is restricted to perform MDT data measurement collection only when its serving cell is in a PLMN/SNPN/TA/cell list configured by a network.
b. restriction information for a neighboring cell. For example, in a case where the UE is allowed to perform MDT data measurement collection, a frequency point and a cell identifier of the neighboring cell for which the UE may perform measurement collection are restricted.

### 3. Scenario Classification of Non-Terrestrial Network (Non-Terrestrial Network, NTN) Service Links

Earth-fixed (Earth-fixed) scenario: a satellite remains stationary relative to a fixed position on the ground, so a beam providing coverage continuously covers a same geographical area. In this scenario, mobility and other behaviors of a UE in an NTN cell are substantially consistent with those in a terrestrial network (Terrestrial Network, TN) cell.

Quasi-Earth-fixed (Quasi-Earth-fixed) scenario: a beam providing coverage covers a geographical area for a limited time and covers another geographical area for another limited time. In this scenario, a ground NTN area covered by the beam does not move or change for a certain period, and is covered by another beam in a subsequent period.

Earth-moving (Earth-moving) scenario: coverage is provided by a beam with a coverage area sliding on a surface of the earth. Since a satellite orbit is not synchronized with the Earth's rotation, the NTN cell in this scenario moves continuously.

### 4. Cell Reselection Enhancement for Quasi-Earth-fixed Scenario or Earth-moving Scenario

For cell reselection enhancement in the Quasi-Earth-fixed scenario, a solution of broadcasting reference location information of a cell (serving cell or neighboring cell) in system information is introduced. The reference location information is associated with delivered time information, epoch time (epoch time). If a UE has valid location information, using a distance between the UE and the reference location of the cell (serving cell and/or neighboring cell) is supported to assist cell reselection. A service stop time t-Service of the serving cell is further introduced, so that the UE triggers measurement of the neighboring cell in a timely manner. The service stop time of the serving cell is broadcast to the UE via the system information.

For cell reselection enhancement in the Earth-moving scenario, a solution of providing moving reference point information (movingReferenceLocation) at a certain time (epoch time) to a terminal is introduced. The terminal may estimate a real-time cell reference point position for a future period according to information such as ephemeris, epoch time, movingReferenceLocation and so on.

### 5. Reselection Enhancement from NTN Cell to TN Cell

An area of the NTN cell is much larger than that of the TN cell. The NTN cell may have many TN neighboring cells, and these neighboring cells may be distributed only at certain positions of the NTN cell. At positions without TN deployment, to avoid unnecessary power consumption caused by measurement of these frequency points, reselection enhancement from the NTN cell to the TN cell is introduced. Location information of a TN coverage area is broadcast for the NTN cell, and the UE may determine whether to start measurement of corresponding frequency points according to whether TN coverage exists around. The TN coverage area is constituted by an area list, and information of each TN coverage area includes: a TN area identifier (e.g., tn-AreaId-r18), a reference point parameter (e.g., tn-ReferenceLocation-r18), and a radius parameter (e.g., tn-DistanceRadius-r18).

In the above related art, the restriction range in the MDT configuration is divided into three levels: the network level (the network includes PLMN and/or SNPN), the TA level, and the cell level. However, for the NTN cell, a geographical range covered by a single NTN cell is excessively large. For different NTN scenarios, satellites or beams covering an NTN area may change, or an NTN satellite coverage area may move. Adopting the MDT configuration in the above related art is not conducive for operators to collect MDT results in a targeted manner, and may cause waste of power consumption overhead during MDT measurement collection by the UE.

For a TN scenario, although a geographical range of the TN cell is smaller than that of the NTN cell, MDT configuration solution in the above related art is also not conducive for operators to collect MDT results in a targeted manner, and also has a problem of possible waste of power consumption overhead during MDT measurement collection by the UE.

To address the above problems, the present disclosure provides solutions, and the solutions may be applicable to both NTN scenario and TN scenario. The network side can configure a range for the terminal to perform MDT measurement collection in a targeted manner as required, thereby improving the flexibility of MDT measurement collection and reducing unnecessary terminal power consumption.

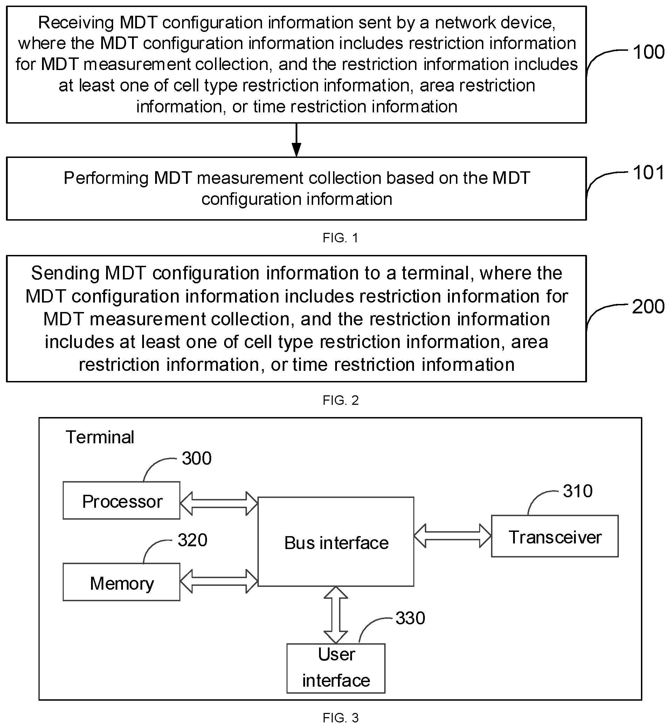

FIG. 1 is a schematic flowchart of an MDT measurement collection method provided by an embodiment of the present disclosure, applied to a terminal. As shown in FIG. 1, the method includes the following steps.

Step 100: receiving MDT configuration information sent by a network device, where the MDT configuration information includes restriction information for MDT measurement collection, and the restriction information includes at least one of cell type restriction information, area restriction information, or time restriction information.

Step 101: performing MDT measurement collection based on the MDT configuration information.

Specifically, the network device (e.g., a base station) in the present disclosure may carry the restriction information for MDT measurement collection in the MDT configuration information sent to the terminal, so as to configure a range for the terminal to perform MDT measurement collection in a targeted manner.

In the present disclosure, MDT measurement collection refers to: at a terminal side, collection and logging of terminal available measurement results (measurements or measurement results), measurement configurations, measurement-related information and the like for MDT purposes; and/or at the terminal side, performing terminal measurement only for MDT purposes, and collecting and logging relevant measurement results, measurement configurations, measurement-related information and the like.

In some embodiments, the MDT configuration information may be NTN-related MDT configuration information.

In some embodiments, the cell type restriction information includes one or more of the following indication information.
(1) First indication information, where the first indication information is used to indicate that the terminal measures and collects MDT data of a TN cell and/or an NTN cell.

For example, the network device carries the first indication information in the MDT configuration information sent to the terminal, and the first indication information indicates that the terminal collects measurement results of the TN cell only, or indicates that the terminal collects measurement results of the NTN cell only, or indicates that the terminal collects measurement results of both the NTN cell and the TN cell. The terminal may perform MDT measurement collection for a restricted cell type according to indication of the first indication information.

(2) Second indication information, where the second indication information is used to indicate whether the terminal is allowed to measure and collect MDT data of the NTN cell in a case where the terminal camps on or is connected to the TN cell.

For example, the network device carries the second indication information in the MDT configuration information sent to the terminal, and the second indication information indicates whether the terminal is allowed to collect measurement results on an NTN frequency point or the NTN cell when the terminal camps on or is connected to the TN cell. When the terminal camps on or is connected to the TN cell, the terminal may determine whether to perform NTN-related MDT measurement collection according to indication of the second indication information.

(3) Third indication information, where the third indication information is used to indicate whether the terminal is allowed to measure and collect MDT data of the TN cell in a case where the terminal camps on or is connected to the NTN cell.

For example, the network device carries the third indication information in the MDT configuration information sent to the terminal, and the third indication information indicates whether the terminal is allowed to collect measurement results on a TN frequency point or the TN cell when the terminal camps on or is connected to the NTN cell. When the terminal camps on or is connected to the NTN cell, the terminal may determine whether to perform TN-related MDT measurement collection according to indication of the third indication information.

By indicating the cell type restriction information for MDT measurement collection through one or more of the first indication information, the second indication information, and the third indication information, various targeted MDT measurement collection requirements can be satisfied, and the flexibility of MDT measurement collection is improved.

In some embodiments, the area restriction information includes one or more of the following.
(1) A TN area identifier. The TN area identifier is used to identify a TN coverage area.

In some implementations, an area for MDT measurement collection may be indicated in combination with "information of a TN coverage area broadcast by a network for an NTN cell" mentioned in related art. For example, in a case where the network broadcasts the information of the TN coverage area for the NTN cell, if an area for MDT measurement collection includes the TN coverage area, the network device may directly carry a TN area identifier corresponding to the area for MDT measurement collection in the MDT configuration information. The terminal may obtain a specific area range according to the TN area identifier carried in the MDT configuration information in combination with the information of the TN coverage area broadcast by the network.

(2) A restricted area list. The restricted area list is an area list for MDT measurement collection.

In some embodiments, each entry in the restricted area list includes a reference point parameter and a radius parameter. The reference point parameter is used to determine a reference point position, and the radius parameter is used to determine a radius of an area range to be restricted, which may be a radius value, a distance threshold, or the like. A specific area range can be determined by combining the reference point position and the radius.

For example, for the NTN cell, the restricted area list may be used for MDT data collection within a partial geographical position range in the NTN cell, avoiding MDT collection for unnecessary geographical positions and saving terminal power consumption. For the TN cell, the restricted area list may include MDT data collection for geographical ranges corresponding to multiple TN cells, without delivering cell identifiers of these cells, saving configuration signaling.

In some embodiments, each entry in the restricted area list includes a logical identifier (Identifier, ID) mapped to a fixed area. The fixed area is an area mapped according to a certain mapping rule, such as an area mapped based on a nine-grid format, three-sector angle of a base station, or the like. The terminal and the network device follow the same mapping rule, which may be agreed upon in a protocol or indicated by the network side to the terminal.

For example, both the terminal and the network device divide the NTN cell according to a nine-grid mapping rule. One NTN cell may be divided into 9 areas, and each area corresponds to a logical identifier. The network device may indicate that the terminal performs MDT measurement only for one or more areas in the NTN cell, e.g., performing MDT measurement collection only for an area with a mapped logical identifier of 0.

(3) Restricted frequency point information. The restricted frequency point information is used to indicate which frequency points the terminal performs MDT measurement collection for.

Since TN and NTN are basically deployed on different frequency points, in some implementations, the restricted frequency point information may be used to indicate MDT measurement collection for the TN cell or the NTN cell.

In some embodiments, the restricted frequency point information is common restricted frequency point information for performing MDT measurement collection for a serving cell and performing MDT measurement collection for a neighboring cell, that is, MDT measurement collection for the serving cell of the terminal and the neighboring cell shares a same set of restricted frequency point information. Or, the restricted frequency point information includes restricted frequency point information configured for performing MDT measurement collection for the serving cell, and/or restricted frequency point information configured for performing MDT measurement collection for the neighboring cell, that is, MDT measurement collection for the serving cell of the terminal and the neighboring cell may each be separately configured with or without respective restricted frequency information.

A restricted area range for MDT measurement collection is indicated through a combination of one or more of the TN area identifier, the restricted area list, and the restricted frequency point information, thereby improving the flexibility of MDT configuration and saving signaling overhead as much as possible.

In some embodiments, the time restriction information includes any one of the following.
(1) Deadline information for measurement collection. The deadline information for measurement collection is used to indicate a deadline time point for the terminal to perform MDT measurement collection.

In some implementations, for NTN-related MDT measurement collection, the deadline time point for measurement collection may be a time calculated by the network at which the NTN cell ends covering a certain area position.

When the MDT configuration information indicates only the deadline information for measurement collection, the terminal may determine a start time point for MDT measurement collection in other manners, such as protocol agreement: the start time point for the terminal to perform MDT measurement collection is when the terminal receives the MDT configuration information, or when a certain condition is satisfied (e.g., when the terminal enters an idle state or an inactive state, or when the terminal enters a network-configured cell, or when the terminal enters an area range restricted by the MDT configuration information, etc.).

(2) Start time information for measurement collection and the deadline information for measurement collection. The start time information for measurement is used to indicate a start time point for the terminal to perform MDT measurement collection.

In some implementations, for NTN-related MDT measurement collection, a start time point for measurement may be a time calculated by the network at which the NTN cell covers a certain area position; the deadline time point for measurement collection may be a time calculated by the network at which the NTN cell ends covering the certain area position.

(3) The start time information for measurement collection and duration information for measurement collection. The duration information for measurement is used to indicate a duration for the terminal to perform MDT measurement collection.

In some implementations, for NTN-related MDT measurement collection, the start time point for measurement collection may be a time calculated by the network at which the NTN cell covers a certain area position; the deadline time point calculated according to the duration information for measurement may be a time calculated by the network at which the NTN cell ends covering the certain area position.

In some embodiments, for the Earth moving scenario, since a position of the NTN cell continuously changes in this scenario, to avoid unnecessary power consumption, the network may configure the terminal to perform MDT measurement collection only within a set time according to ephemeris information and the like (by carrying the time restriction information in the MDT configuration information). For other time, since the NTN cell required for the terminal to measure has not covered an area where the network desires to perform MDT measurement collection, the measurement collection behavior of the terminal may be stopped.

In some embodiments, for the Quasi-Earth-fixed scenario, since satellites or beams covering the NTN cell may be different in different time periods in this scenario, for targeted measurement, the network may configure the terminal to perform MDT measurement collection only within a set time according to ephemeris information and the like (by carrying the time restriction information in the MDT configuration information). For other time, e.g., a time point of switching satellites or beams, since the NTN cell may be covered by a different satellite or beam, the measurement collection behavior of the terminal may be stopped.

A specific indication manner or time format of the time restriction information is not limited in the present disclosure, and existing parameter information may be partially reused, or indication may be performed through newly defined time parameters, etc. For example, a time format relative to t-Service (the service stop time of the serving cell) may be used to indicate the start time point for measurement collection or the deadline time point for measurement collection, a time format of epoch time may be used to save signaling, or a time format of coordinated universal time (Coordinated Universal Time, UTC) may be directly configured, etc.

By configuring one or more of the start time information for measurement collection, the deadline information for measurement collection, and the duration information for measurement collection, a time period for the terminal to perform MDT measurement collection can be indicated more flexibly, thereby avoiding waste of terminal power caused by continuous measurement collection at unnecessary time.

In some embodiments, the restriction information is one or more sets of restriction information, each set of the restriction information is associated with one or more cells, or each set of the restriction information is associated with one or more tracking areas, or each set of the restriction information is associated with one or more networks.

For example, the MDT configuration information carries one or more of multiple sets of cell type restriction information, multiple sets of area restriction information, and multiple sets of time restriction information. One set of area restriction information and one set of time restriction information are configured for each cell or cell group, or one set of cell type restriction information and one set of area restriction information are configured for each network or network group (the network includes PLMN and/or SNPN), or one set of time restriction information is configured for each TA or TA list, etc.

In the present disclosure, the cell type restriction information, the area restriction information, and the time restriction information may be arranged and combined according to existing restriction range levels in MDT configuration at different network/tracking area/cell levels, and the terminal may perform MDT measurement collection based on combined restriction information.

By configuring one or more sets of restriction information for MDT measurement collection, and associating them with cells, tracking areas, or networks, different MDT measurement collection requirements for different cells, tracking areas, or networks can be satisfied, thereby improving the flexibility of MDT measurement collection.

In the embodiments of the present disclosure, the area restriction information and/or the time restriction information carried in the MDT configuration information may partially reuse parameter information in existing NTN/TN-related configurations, or the network may deliver newly defined restriction information to the terminal, which is not limited in the present disclosure.

According to the MDT measurement collection method provided by the embodiments of the present disclosure, by carrying at least one of the cell type restriction information, the area restriction information, or the time restriction information for MDT measurement collection in the MDT configuration information, a range for the terminal to perform MDT measurement collection can be configured in a targeted manner, thereby improving the flexibility of MDT measurement collection, and reducing unnecessary terminal power consumption.

In some embodiments, the method further includes the following operation.

Reporting an MDT measurement collection report, where the MDT measurement collection report includes one or more of the following.
(1) A type of the serving cell of the terminal when collecting an MDT result.

For example, after performing MDT measurement based on the MDT configuration information, the terminal reports the MDT measurement collection report. The MDT measurement collection report includes the MDT result, and also carries the type of the serving cell of the terminal when the terminal collects the MDT result, e.g., the serving cell of the terminal when the terminal collects the MDT result is the TN cell or the NTN cell.

(2) A satellite identifier of a serving satellite of the terminal when collecting the MDT result.

For example, after performing MDT measurement based on the MDT configuration information, the terminal reports the MDT measurement collection report. The MDT measurement collection report includes the MDT result, and also carries the satellite identifier of the serving satellite of the terminal when the terminal collects the MDT result. The satellite identifier indicates which satellite serves the terminal when the terminal collects the MDT result.

(3) Geographic location information of the terminal when collecting the MDT result.

For example, after performing MDT measurement based on the MDT configuration information, the terminal reports the MDT measurement collection report. The MDT measurement collection report includes the MDT result, and also carries the geographic location information of the terminal when the terminal collects the MDT result, so that the network can learn a position of the terminal when collecting the MDT result.

### (4) The MDT configuration information.

For example, after performing MDT measurement based on the MDT configuration information, the terminal reports the MDT measurement collection report. The MDT measurement collection report includes the MDT result, and also carries corresponding MDT configuration information to indicate the MDT configuration information based on which the MDT result is obtained.

Taking Logged MDT measurement collection reporting as an example, after configuration information for Logged MDT measurement collection reporting is delivered to the terminal, the terminal starts measurement logging after entering an idle state or an inactive state, and stores logging results at the terminal side. After the terminal returns to a connected state, the terminal has an opportunity to report stored Logged MDT results to the network side. In this case, the terminal may carry the MDT configuration information in the MDT measurement collection report, and the MDT configuration information is associated with the Logged MDT results, so that the network side can learn the MDT configuration information based on which each Logged MDT result is obtained.

For Immediate MDT measurement collection reporting, the terminal reports in a timely manner, so the network side can associate content reported by the terminal with cell information at that time and MDT configuration information, and report to an operator collection node.

(5) A result calculated by the terminal through calculation based on the MDT configuration information.

For example, after receiving the MDT configuration information from the network side, the terminal independently calculates results such as a reference time, a cell reference point position for each Earth-moving cell according to ephemeris information and the like, and carries these results obtained by calculating in the MDT measurement collection report for reporting when reporting the MDT measurement collection report.

By reporting various information related to the MDT measurement collection report when reporting the report, more auxiliary information is provided for the network side to analyze the MDT measurement collection report, which helps to improve the comprehensiveness and accuracy of MDT measurement collection report analysis.

FIG. 2 is a schematic flowchart of an MDT configuration method provided by an embodiment of the present disclosure, applied to a network device (e.g., a base station). As shown in FIG. 2, the method includes the following steps.

Step 200: sending MDT configuration information to a terminal, where the MDT configuration information includes restriction information for MDT measurement collection, and the restriction information includes at least one of cell type restriction information, area restriction information, or time restriction information.

Specifically, the network device in the present disclosure may carry the restriction information for MDT measurement collection in the MDT configuration information sent to the terminal, so as to configure a range for the terminal to perform MDT measurement collection in a targeted manner.

In some embodiments, the MDT configuration information may be NTN-related MDT configuration information.

In some embodiments, the cell type restriction information includes one or more of the following indication information.
(1) First indication information, where the first indication information is used to indicate that the terminal measures and collects MDT data of a TN cell and/or an NTN cell.

For example, the network device carries the first indication information in the MDT configuration information sent to the terminal, and the first indication information indicates that the terminal collects measurement results of the TN cell only, or indicates that the terminal collects measurement results of the NTN cell only, or indicates that the terminal collects measurement results of both the NTN cell and the TN cell. The terminal may perform MDT measurement collection for a restricted cell type according to indication of the first indication information.

(2) Second indication information, where the second indication information is used to indicate whether the terminal is allowed to measure and collect MDT data of the NTN cell in a case where the terminal camps on or is connected to the TN cell.

For example, the network device carries the second indication information in the MDT configuration information sent to the terminal, and the second indication information indicates whether the terminal is allowed to collect measurement results on an NTN frequency point or the NTN cell when the terminal camps on or is connected to the TN cell. When the terminal camps on or is connected to the TN cell, the terminal may determine whether to perform NTN-related MDT measurement collection according to indication of the second indication information.

(3) Third indication information, where the third indication information is used to indicate whether the terminal is allowed to measure and collect MDT data of the TN cell in a case where the terminal camps on or is connected to the NTN cell.

For example, the network device carries the third indication information in the MDT configuration information sent to the terminal, and the third indication information indicates whether the terminal is allowed to collect measurement results on a TN frequency point or the TN cell when the terminal camps on or is connected to the NTN cell. When the terminal camps on or is connected to the NTN cell, the terminal may determine whether to perform TN-related MDT measurement collection according to indication of the third indication information.

By indicating the cell type restriction information for MDT measurement collection through one or more of the first indication information, the second indication information, and the third indication information, various targeted MDT measurement collection requirements can be satisfied, and the flexibility of MDT measurement collection is improved.

In some embodiments, the area restriction information includes one or more of the following.
(1) A TN area identifier. The TN area identifier is used to identify a TN coverage area.

In some implementations, an area for MDT measurement collection may be indicated in combination with "information of a TN coverage area broadcast by a network for an NTN cell" mentioned in related art. For example, in a case where the network broadcasts the information of the TN coverage area for the NTN cell, if an area for MDT measurement collection includes the TN coverage area, the network device may directly carry a TN area identifier corresponding to the area for MDT measurement collection in the MDT configuration information. The terminal may obtain a specific area range according to the TN area identifier carried in the MDT configuration information in combination with the information of the TN coverage area broadcast by the network.

(2) A restricted area list. The restricted area list is an area list for MDT measurement collection.

In some embodiments, each entry in the restricted area list includes a reference point parameter and a radius parameter. The reference point parameter is used to determine a reference point position, and the radius parameter is used to determine a radius of an area range to be restricted, which may be a radius value, a distance threshold, or the like. A specific area range can be determined by combining the reference point position and the radius.

For example, for the NTN cell, the restricted area list may be used for MDT data collection within a partial geographical position range in the NTN cell, avoiding MDT collection for unnecessary geographical positions and saving terminal power consumption. For the TN cell, the restricted area list may include MDT data collection for geographical ranges corresponding to multiple TN cells, without delivering cell identifiers of these cells, saving configuration signaling.

In some embodiments, each entry in the restricted area list includes a logical identifier mapped to a fixed area. The fixed area is an area mapped according to a certain mapping rule, such as an area mapped based on a nine-grid format, three-sector angle of a base station, or the like. The terminal and the network device follow the same mapping rule, which may be agreed upon in a protocol or indicated by the network side to the terminal.

For example, both the terminal and the network device divide the NTN cell according to a nine-grid mapping rule. One NTN cell may be divided into 9 areas, and each area corresponds to a logical identifier. The network device may indicate that the terminal performs MDT measurement only for one or more areas in the NTN cell, e.g., performing MDT measurement collection only for an area with a mapped logical identifier of 0.

(3) Restricted frequency point information. The restricted frequency point information is used to indicate which frequency points the terminal performs MDT measurement collection for.

Since TN and NTN are basically deployed on different frequency points, in some implementations, the restricted frequency point information may be used to indicate MDT measurement collection for the TN cell or the NTN cell.

In some embodiments, the restricted frequency point information is common restricted frequency point information for performing MDT measurement collection for a serving cell and performing MDT measurement collection for a neighboring cell, that is, MDT measurement collection for the serving cell of the terminal and the neighboring cell shares a same set of restricted frequency point information. Or, the restricted frequency point information includes restricted frequency point information configured for performing MDT measurement collection for the serving cell, and/or restricted frequency point information configured for performing MDT measurement collection for the neighboring cell, that is, MDT measurement collection for the serving cell of the terminal and the neighboring cell may each be separately configured with or without respective restricted frequency information.

A restricted area range for MDT measurement collection is indicated through a combination of one or more of the TN area identifier, the restricted area list, and the restricted frequency point information, thereby improving the flexibility of MDT configuration and saving signaling overhead as much as possible.

In some embodiments, the time restriction information includes any one of the following.
(1) Deadline information for measurement collection. The deadline information for measurement collection is used to indicate a deadline time point for the terminal to perform MDT measurement collection.

In some implementations, for NTN-related MDT measurement collection, the deadline time point for measurement collection may be a time calculated by the network at which the NTN cell ends covering a certain area position.

When the MDT configuration information indicates only the deadline information for measurement collection, the terminal may determine a start time point for MDT measurement collection in other manners, such as protocol agreement: the start time point for the terminal to perform MDT measurement collection is when the terminal receives the MDT configuration information, or when a certain condition is satisfied (e.g., when the terminal enters an idle state or an inactive state, or when the terminal enters a network-configured cell, or when the terminal enters an area range restricted by the MDT configuration information, etc.).

(2) Start time information for measurement collection and the deadline information for measurement collection. The start time information for measurement collection is used to indicate a start time point for the terminal to perform MDT measurement collection.

In some implementations, for NTN-related MDT measurement collection, a start time point for measurement collection may be a time calculated by the network at which the NTN cell covers a certain area position; the deadline time point for measurement collection may be a time calculated by the network at which the NTN cell ends covering the certain area position.

(3) The start time information for measurement collection and duration information for measurement collection. The duration information for measurement collection is used to indicate a duration for the terminal to perform MDT measurement collection.

In some implementations, for NTN-related MDT measurement collection, the start time point for measurement collection may be a time calculated by the network at which the NTN cell covers a certain area position; the deadline time point calculated according to the duration information for measurement collection may be a time calculated by the network at which the NTN cell ends covering the certain area position.

In some embodiments, for the Earth moving scenario, since a position of the NTN cell continuously changes in this scenario, to avoid unnecessary power consumption, the network may configure the terminal to perform MDT measurement collection only within a set time according to ephemeris information and the like (by carrying the time restriction information in the MDT configuration information). For other time, since the NTN cell required for the terminal to measure has not covered an area where the network desires to perform MDT measurement collection, the measurement collection behavior of the terminal may be stopped.

In some embodiments, for the Quasi-Earth-fixed scenario, since satellites or beams covering the NTN cell may be different in different time periods in this scenario, for targeted measurement, the network may configure the terminal to perform MDT measurement collection only within a set time according to ephemeris information and the like (by carrying the time restriction information in the MDT configuration information). For other time, e.g., a time point of switching satellites or beams, since the NTN cell may be covered by a different satellite or beam, the measurement collection behavior of the terminal may be stopped.

A specific indication manner or time format of the time restriction information is not limited in the present disclosure, and existing parameter information may be partially reused, or indication may be performed through newly defined time parameters, etc. For example, a time format relative to t-Service (the service stop time of the serving cell) may be used to indicate the start time point for measurement collection or the deadline time point for measurement collection, a time format of epoch time may be used to save signaling, or a time format of UTC time may be directly, etc.

By configuring one or more of the start time information for measurement collection, the deadline information for measurement collection, and the duration information for measurement collection, a time period for the terminal to perform MDT measurement collection can be indicated more flexibly, thereby avoiding waste of terminal power caused by continuous measurement collection at unnecessary time.

In some embodiments, the restriction information is one or more sets of restriction information, each set of the restriction information is associated with one or more cells, or each set of the restriction information is associated with one or more tracking areas, or each set of the restriction information is associated with one or more networks.

For example, the MDT configuration information carries one or more of multiple sets of cell type restriction information, multiple sets of area restriction information, and multiple sets of time restriction information. One set of area restriction information and one set of time restriction information are configured for each cell or cell group, or one set of cell type restriction information and one set of area restriction information are configured for each network or network group (the network includes PLMN and/or SNPN), or one set of time restriction information is configured for each TA or TA list, etc.

By configuring one or more sets of restriction information for MDT measurement collection, and associating them with cells, tracking areas, or networks, different MDT measurement collection requirements for different cells, tracking areas, or networks can be satisfied, thereby improving the flexibility of MDT measurement collection.

In the embodiments of the present disclosure, the area restriction information and/or the time restriction information carried in the MDT configuration information may partially reuse parameter information in existing NTN/TN-related configurations, or the network may deliver newly defined restriction information to the terminal, which is not limited in the present disclosure.

According to the MDT configuration method provided by the embodiments of the present disclosure, by carrying at least one of the cell type restriction information, the area restriction information, or the time restriction information for MDT measurement collection in the MDT configuration information, a range for the terminal to perform MDT measurement collection can be configured in a targeted manner, thereby improving the flexibility of MDT measurement collection, and reducing unnecessary terminal power consumption.

In some embodiments, the method further includes the following operation.

Receiving an MDT measurement collection report sent by the terminal, where the MDT measurement collection report includes one or more of the following.
(1) A type of the serving cell of the terminal when collecting an MDT result.

For example, after performing MDT measurement based on the MDT configuration information, the terminal reports the MDT measurement collection report. The MDT measurement collection report includes the MDT result, and also carries the type of the serving cell of the terminal when the terminal collects the MDT result, e.g., the serving cell of the terminal when the terminal collects the MDT result is the TN cell or the NTN cell.

(2) A satellite identifier of a serving satellite of the terminal when collecting the MDT result.

For example, after performing MDT measurement based on the MDT configuration information, the terminal reports the MDT measurement collection report. The MDT measurement collection report includes the MDT result, and also carries the satellite identifier of the serving satellite of the terminal when the terminal collects the MDT result. The satellite identifier indicates which satellite serves the terminal when the terminal collects the MDT result.

(3) Geographic location information of the terminal when collecting the MDT result.

For example, after performing MDT measurement based on the MDT configuration information, the terminal reports the MDT measurement collection report. The MDT measurement collection report includes the MDT result, and also carries the geographic location information of the terminal when the terminal collects the MDT result, so that the network can learn a position of the terminal when collecting the MDT result.

### (4) The MDT configuration information.

For example, after performing MDT measurement based on the MDT configuration information, the terminal reports the MDT measurement collection report. The MDT measurement collection report includes the MDT result, and also carries corresponding MDT configuration information to indicate the MDT configuration information based on which the MDT result is obtained.

Taking Logged MDT measurement collection reporting as an example, after configuration information for Logged MDT measurement collection reporting is delivered to the terminal, the terminal starts measurement logging after entering an idle state or an inactive state, and stores logging results at the terminal side. After the terminal returns to a connected state, the terminal has an opportunity to report stored Logged MDT results to the network side. In this case, the terminal may carry the MDT configuration information in the MDT measurement collection report, and the MDT configuration information is associated with the Logged MDT results, so that the network side can learn the MDT configuration information based on which each Logged MDT result is obtained.

For Immediate MDT measurement collection reporting, the terminal reports in a timely manner, so the network side can associate content reported by the terminal with cell information at that time and MDT configuration information, and report to an operator collection node.

(5) A result calculated by the terminal through calculation based on the MDT configuration information.

For example, after receiving the MDT configuration information from the network side, the terminal independently calculates results such as a reference time, a cell reference point position for each Earth-moving cell according to ephemeris information and the like, and carries these results obtained by calculating in the MDT measurement collection report for reporting when reporting the MDT measurement collection report.

By reporting various information related to the MDT measurement collection report when reporting the report, more auxiliary information is provided for the network side to analyze the MDT measurement collection report, which helps to improve the comprehensiveness and accuracy of MDT measurement collection report analysis.

The methods provided in various embodiments of the present disclosure are based on the same application concept. Therefore, for implementations of the methods, reference may be made to each other, and repeated details will not be elaborated here.

The methods provided in the foregoing embodiments of the present disclosure are illustrated below through examples of specific application scenarios.

### Example 1: Cell type restriction information.

In MDT configuration, a measurement collection indication of the NTN cell and/or the TN cell may be carried. The indication manner may be one or more of the following.
(1) Indicating collection of only measurement results of the TN cell, or collection of only measurement results of the NTN cell, or collection of measurement results of both the NTN cell and the TN cell.
(2) Indicating whether to allow collection of measurement results on an NTN frequency point or the NTN cell when the UE camps on or is connected to the TN cell.
(3) Indicating whether to allow collection of measurement results on a TN frequency point or the TN cell when the UE camps on or is connected to the NTN cell.

### Example 2: Area restriction information.

In MDT configuration, a restriction parameter related to a location area may be carried. The carrying manner may be one or more of the following.
(1) For a cell for which the network broadcasts TN coverage area information, the area restriction information in the MDT configuration may carry a TN area identifier. This method leverages the existing measurement area scope configured for a TN coverage area in NTN for reselection to TN cell, so MDT measurement collection may be performed mainly for the TN coverage area.
(2) Area restriction information in the MDT configuration may carry a restricted area list.
   i. Each entry in the list includes a reference point coordinate plus a radius or a threshold.

In this manner, an area restriction range may be set regardless of a type of a cell for which MDT measurement collection is performed. For the NTN cell, the list may be used for MDT data collection within a partial geographical position range in the NTN cell, avoiding MDT collection for unnecessary geographical positions and saving UE power consumption. For the TN cell, the list may include MDT data collection for geographical ranges corresponding to multiple TN cells, without delivering cell identifiers of these cells, saving configuration signaling.
ii. Each entry in the list includes a logical ID mapped to a fixed area.

In this manner, in each NTN cell, a logical ID may be used to map to a fixed area. The fixed area is mapped according to a certain mapping rule, such as a nine-grid format, a three-sector angle of a base station, or the like. Both the UE and the base station divide the NTN cell according to the same mapping rule. The mapping rule may be a default rule between the UE and the network side, or delivered by the network side. For example, the network side configures the UE to divide the NTN cell according to a nine-grid rule, and perform MDT measurement collection only for an area with a mapping ID=0.

(3) An area range in the MDT configuration may carry restricted frequency point information requiring MDT measurement collection. In this manner, since TN and NTN are basically deployed on different frequency points, carrying relevant frequency point information can explicitly indicate MDT measurement collection for different types of frequency points of TN or NTN. The restricted frequency point information may restrict a serving cell of the UE, and/or restrict a range of neighboring cell MDT data measurement collection performed by the UE:
i. the serving cell of the UE and the neighboring cell share a same piece of restricted frequency point information for MDT measurement collection.
ii. the serving cell of the UE and the neighboring cell may be separately configured with/not configured with respective restricted frequency point information for MDT measurement collection.

The foregoing area restriction information may partially reuse existing information in NTN configuration parameters, such as a location reference point movingReferenceLocation of a cell in the Earth-moving scenario.

### Example 3: Time restriction information.

In MDT configuration, the time restriction information may be carried. The carrying manner may be one or more of the following.
(1) The carried time restriction information includes deadline information for measurement collection. A start time point for MDT measurement collection of the UE is when MDT-related configuration is received, or when a certain condition is satisfied (e.g., entering an idle state or an inactive state, entering a network-configured cell, or entering a location restricted area in Example 2, etc.). A deadline time point is a time point indicated by the deadline information for measurement collection.
(2) The carried time restriction information includes start time information for measurement collection plus the deadline information for measurement collection, or the start time information for measurement collection plus duration information for measurement collection. A start time point for measurement collection may be a time calculated by the network at which the NTN cell covers a certain area position, i.e., the start time point for MDT measurement collection. A deadline time point for measurement collection or a deadline time point obtained through calculation according to the duration information for measurement collection may be a time calculated by the network at which the NTN cell ends covering the certain area position, i.e., the deadline time point for MDT measurement collection.

Carrying the time restriction information for the Earth moving scenario:
since a position of the NTN cell continuously changes in the Earth moving scenario, to avoid unnecessary power consumption, the network may configure the UE to perform MDT measurement collection only within a set time according to ephemeris information and the like. For other time, since the NTN cell required for the UE to measure has not covered an area where the network desires to perform MDT measurement collection, the measurement collection behavior of the UE may be stopped.

Carrying the time restriction information for the Quasi-Earth-fixed scenario:
since satellites or beams covering the NTN cell may be different in different time periods in the Quasi-Earth-fixed scenario, for targeted measurement collection, the network may configure the UE to perform MDT measurement collection only within a set time according to ephemeris information and the like. For other time, e.g., a time point of switching satellites or beams, since the NTN cell may be covered by a different satellite or beam, the measurement collection behavior of the UE may be stopped.

The foregoing time restriction information may partially reuse existing information in NTN configuration parameters, such as deadline for measurement collection t-Service of a cell.

It should be noted that the cell type restriction information in Example 1, the area restriction information in Example 2, and the time restriction information in Example 3 may be arranged and combined according to existing restriction range levels in MDT configuration at different network/tracking area/cell levels.

### Example 4: Protocol signaling plane enhancement and base station processing.

At a protocol level, the foregoing various restriction information may be carried over a wired network in:
(1) interface MDT configuration for Signalling based MDT measurement collection reporting transmitted to a base station via a core network, and/or
(2) wired network MDT configuration for Management based MDT measurement collection reporting directly sent by an operator to a base station.

At a protocol level, the foregoing enhanced information (restriction information) may be carried over an air interface in:
(1) air interface MDT configuration for Signalling based MDT measurement collection reporting, and/or,
(2) air interface MDT configuration for Management based MDT measurement collection reporting.

For MDT configuration information carried over the wired network, the MDT configuration information carried over the wired network may be different from that carried over the air interface due to processing of partial content by the base station. For example, for the area restriction information, the base station may receive multiple area ranges for which MDT measurement collection is required to be performed, the base station may configure a UE close to a certain restricted area range to perform possible Logged MDT measurement measurement collection reporting for the restricted area. For another example, for the time restriction information, configuration information for Immediate MDT measurement measurement collection reporting is transmitted between base station nodes as the UE moves, the base station may trigger the UE to perform MDT measurement collection over the air interface only when the UE reaches a start time point for performing MDT measurement collection.

### Example 5: UE reports an MDT measurement collection result.

Under the foregoing MDT measurement collection restrictions, when reporting the MDT measurement collection result, the UE may carry:
(1) A type of a serving cell where the UE is located when collecting an MDT result, e.g., a TN cell or an NTN cell.
(2) An identifier of a serving satellite of the UE when collecting the MDT result.
(3) Geographic location information of the UE when collecting the MDT result.
(4) The MDT configuration information received by the UE from a base station side.
(5) A result calculated by the UE after receiving the MDT configuration information from the base station side, e.g., a reference time, a cell reference point position and the like for each Earth-moving cell independently calculated by the UE according to ephemeris information.

Content reported by the UE over the air interface for Logged MDT measurement collection reporting is logging entries at periodic different time points or event-triggered logging entries (including multiple logs (periodically) and a single log therein). Therefore, information carried in different logging entries may differ. For example, information carried in logging entries 1 and 2 is relevant information for measurement collection for restricted area A, while the UE changes to restricted area B when collecting logging entry 3, and thus relevant information is carried for restricted area B.

For Immediate MDT measurement collection reporting, the UE reports in a timely manner, so the base station may associate content reported by the UE with cell information at that time and MDT configuration information, and report to an operator collection node.

The methods and apparatuses provided in various embodiments of the present disclosure are based on the same application concept. Since principles of the methods and apparatuses for solving problems are similar, for implementations of the apparatuses and methods, reference may be made to each other, and repeated parts will not be elaborated here.

FIG. 3 is a schematic structural diagram of a terminal provided by an embodiment of the present disclosure. As shown in FIG. 3, the terminal includes a memory 320, a transceiver 310, and a processor 300. The processor 300 and the memory 320 may also be physically arranged separately.

The memory 320 is configured to store a computer program. The transceiver 310 is configured to transmit and receive data under control of the processor 300.

Specifically, the transceiver 310 is configured to receive and send data under control of the processor 300.

In FIG. 3, a bus architecture may include any number of interconnected buses and bridges, and specifically, various circuits of one or more processors represented by the processor 300 and a memory represented by the memory 320 are linked together. The bus architecture may also link various other circuits, such as a peripheral device, a voltage regulator, a power management circuit and the like, which are well known in the art and will thus not be further described in the present disclosure. A bus interface provides an interface. The transceiver 310 may be multiple elements, including a transmitter and a receiver, and provide a unit for communication with various other apparatuses on transmission media. These transmission media include a wireless channel, a wired channel, an optical cable and other transmission media. For different user devices, the user interface 330 may also be an interface that can be connected externally/internally to a required device, and the connected device includes, but is not limited to, a keypad, a display, a speaker, a microphone, a joystick, etc.

The processor 300 is responsible for managing the bus architecture and general processing, and the memory 320 can store data used by the processor 300 when executing operations.

The processor 300 may be a central processing unit (Central Processing Unit, CPU), an application specific integrated circuit (Application Specific Integrated Circuit, ASIC), a field-programmable gate array (Field-Programmable Gate Array, FPGA), or a complex programmable logic device (Complex Programmable Logic Device, CPLD), and the processor may also adopt a multi-core architecture.

By calling the computer program stored in the memory 320, the processor 300 is configured to execute any of the methods provided by the embodiments of the present disclosure in accordance with obtained executable instructions, for example: receiving MDT configuration information sent by a network device, where the MDT configuration information includes restriction information for MDT measurement collection, and the restriction information includes at least one of cell type restriction information, area restriction information, or time restriction information; performing MDT measurement collection based on the MDT configuration information.

In some embodiments, the cell type restriction information includes one or more of the following indication information:
first indication information, where the first indication information is used to indicate that the terminal measures and collects MDT data of a terrestrial network TN cell and/or a non-terrestrial network NTN cell;
second indication information, where the second indication information is used to indicate whether the terminal is allowed to measure and collect MDT data of the NTN cell in a case where the terminal camps on or is connected to the TN cell;
third indication information, where the third indication information is used to indicate whether the terminal is allowed to measure and collect MDT data of the TN cell in a case where the terminal camps on or is connected to the NTN cell.

In some embodiments, the area restriction information includes one or more of the following:
a TN area identifier;
a restricted area list;
restricted frequency point information.

In some embodiments, each entry in the restricted area list includes a reference point parameter and a radius parameter; or, each entry in the restricted area list includes a logical identifier mapped to a fixed area.

In some embodiments, the restricted frequency point information is common restricted frequency point information for performing MDT measurement collection for a serving cell and performing MDT measurement collection for a neighboring cell; or,
the restricted frequency point information includes restricted frequency point information configured for performing MDT measurement collection for the serving cell, and/or restricted frequency point information configured for performing MDT measurement collection for the neighboring cell.

In some embodiments, the time restriction information includes any one of the following:
deadline information for measurement collection;
start time information for measurement collection and the deadline information for measurement collection;
the start time information for measurement collection and duration information for measurement collection.

In some embodiments, the restriction information is one or more sets of restriction information, each set of the restriction information is associated with one or more cells, or each set of the restriction information is associated with one or more tracking areas, or each set of the restriction information is associated with one or more networks.

In some embodiments, the method further includes:
reporting an MDT measurement collection report, where the MDT measurement collection report includes one or more of the following:
a type of a serving cell of the terminal when collecting an MDT result;
a satellite identifier of a serving satellite of the terminal when collecting the MDT result;
geographic location information of the terminal when collecting the MDT result;
the MDT configuration information;
a result obtained by the terminal through calculation based on the MDT configuration information.

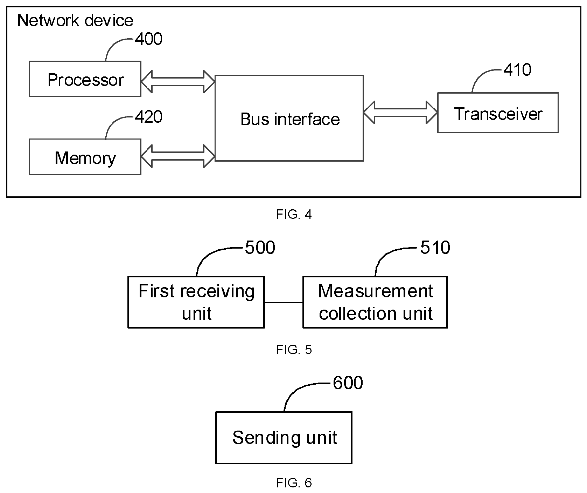

FIG. 4 is a schematic structural diagram of a network device provided by an embodiment of the present disclosure. As shown in FIG. 4, the network device includes a memory 420, a transceiver 410, and a processor 400. The processor 400 and the memory 420 may also be physically arranged separately.

The memory 420 is configured to store a computer program. The transceiver 410 is configured to transmit and receive data under control of the processor 400.

Specifically, the transceiver 410 is configured to receive and send data under control of the processor 400.

In FIG. 4, a bus architecture may include any number of interconnected buses and bridges, and specifically, various circuits of one or more processors represented by the processor 400 and a memory represented by the memory 420 are linked together. The bus architecture may also link various other circuits, such as a peripheral device, a voltage regulator, a power management circuit and the like, which are well known in the art and will thus not be further described in the present disclosure. A bus interface provides an interface. The transceiver 410 may be multiple elements, including a transmitter and a receiver, and provide a unit for communication with various other apparatuses on transmission media. These transmission media include a wireless channel, a wired channel, an optical cable and other transmission media.

The processor 400 is responsible for managing the bus architecture and general processing, and the memory 420 can store data used by the processor 400 when executing operations.

The processor 400 may be a CPU, an ASIC, a FPGA, or a CPLD, and the processor may also adopt a multi-core architecture.

By calling the computer program stored in the memory 420, the processor 400 is configured to execute any of the methods provided by the embodiments of the present disclosure in accordance with obtained executable instructions, for example: sending MDT configuration information to a terminal, where the MDT configuration information includes restriction information for MDT measurement collection, and the restriction information includes at least one of cell type restriction information, area restriction information, or time restriction information.

In some embodiments, the cell type restriction information includes one or more of the following indication information:
first indication information, where the first indication information is used to indicate that the terminal measures and collects MDT data of a terrestrial network TN cell and/or a non-terrestrial network NTN cell;
second indication information, where the second indication information is used to indicate whether the terminal is allowed to measure and collect MDT data of the NTN cell in a case where the terminal camps on or is connected to the TN cell;
third indication information, where the third indication information is used to indicate whether the terminal is allowed to measure and collect MDT data of the TN cell in a case where the terminal camps on or is connected to the NTN cell.

In some embodiments, the area restriction information includes one or more of the following:
a TN area identifier;
a restricted area list;
restricted frequency point information.

In some embodiments, each entry in the restricted area list includes a reference point parameter and a radius parameter; or, each entry in the restricted area list includes a logical identifier mapped to a fixed area.

In some embodiments, the restricted frequency point information is common restricted frequency point information for performing MDT measurement collection for a serving cell and performing MDT measurement collection for a neighboring cell; or,
the restricted frequency point information includes restricted frequency point information configured for performing MDT measurement collection for the serving cell, and/or restricted frequency point information configured for performing MDT measurement collection for the neighboring cell.

In some embodiments, the time restriction information includes any one of the following:
deadline information for measurement collection;
start time information for measurement collection and the deadline information for measurement collection;
the start time information for measurement collection and duration information for measurement collection.

In some embodiments, the restriction information is one or more sets of restriction information, each set of the restriction information is associated with one or more cells, or each set of the restriction information is associated with one or more tracking areas, or each set of the restriction information is associated with one or more networks.

In some embodiments, the method further includes:
receiving an MDT measurement collection report sent by the terminal, where the MDT measurement collection report includes one or more of the following:
a type of a serving cell of the terminal when collecting an MDT result;
a satellite identifier of a serving satellite of the terminal when collecting the MDT result;
geographic location information of the terminal when collecting the MDT result;
the MDT configuration information;
a result obtained by the terminal through calculation based on the MDT configuration information.

It should be noted herein that the foregoing terminal and network device provided by the embodiments of the present disclosure can implement all method steps implemented by the foregoing method embodiments and achieve the same technical effects. The part of this embodiment which is same as the method embodiments and the beneficial effects thereof will not be described in detail here.

FIG. 5 is a schematic structural diagram of an MDT measurement collection apparatus provided by an embodiment of the present disclosure. As shown in FIG. 5, the apparatus includes:
a first receiving unit 500, configured to receive MDT configuration information sent by a network device, where the MDT configuration information includes restriction information for MDT measurement collection, and the restriction information includes at least one of cell type restriction information, area restriction information, or time restriction information;
a measurement collection unit 510, configured to perform MDT measurement collection based on the MDT configuration information.

In some embodiments, the cell type restriction information includes one or more of the following indication information:
first indication information, where the first indication information is used to indicate that the terminal measures and collects MDT data of a terrestrial network TN cell and/or a non-terrestrial network NTN cell;
second indication information, where the second indication information is used to indicate whether the terminal is allowed to measure and collect MDT data of the NTN cell in a case where the terminal camps on or is connected to the TN cell;
third indication information, where the third indication information is used to indicate whether the terminal is allowed to measure and collect MDT data of the TN cell in a case where the terminal camps on or is connected to the NTN cell.

In some embodiments, the area restriction information includes one or more of the following:
a TN area identifier;
a restricted area list;
restricted frequency point information.

In some embodiments, each entry in the restricted area list includes a reference point parameter and a radius parameter; or, each entry in the restricted area list includes a logical identifier mapped to a fixed area.

In some embodiments, the restricted frequency point information is common restricted frequency point information for performing MDT measurement collection for a serving cell and performing MDT measurement collection for a neighboring cell; or,
the restricted frequency point information includes restricted frequency point information configured for performing MDT measurement collection for the serving cell, and/or restricted frequency point information configured for performing MDT measurement collection for the neighboring cell.

In some embodiments, the time restriction information includes any one of the following:
deadline information for measurement collection;
start time information for measurement collection and the deadline information for measurement collection;
the start time information for measurement collection and duration information for measurement collection.

In some embodiments, the restriction information is one or more sets of restriction information, each set of the restriction information is associated with one or more cells, or each set of the restriction information is associated with one or more tracking areas, or each set of the restriction information is associated with one or more networks.

In some embodiments, the apparatus further includes:
a reporting unit, configured to report an MDT measurement collection report, where the MDT measurement collection report includes one or more of the following:
a type of a serving cell of the terminal when collecting an MDT result;
a satellite identifier of a serving satellite of the terminal when collecting the MDT result;
geographic location information of the terminal when collecting the MDT result;
the MDT configuration information;
a result obtained by the terminal through calculation based on the MDT configuration information.

FIG. 6 is a schematic structural diagram of an MDT configuration apparatus provided by an embodiment of the present disclosure. As shown in FIG. 6, the apparatus includes:
a sending unit 600, configured to send MDT configuration information to a terminal, where the MDT configuration information includes restriction information for MDT measurement collection, and the restriction information includes at least one of cell type restriction information, area restriction information, or time restriction information.

In some embodiments, the cell type restriction information includes one or more of the following indication information:
first indication information, where the first indication information is used to indicate that the terminal measures and collects MDT data of a terrestrial network TN cell and/or a non-terrestrial network NTN cell;
second indication information, where the second indication information is used to indicate whether the terminal is allowed to measure and collect MDT data of the NTN cell in a case where the terminal camps on or is connected to the TN cell;
third indication information, where the third indication information is used to indicate whether the terminal is allowed to measure and collect MDT data of the TN cell in a case where the terminal camps on or is connected to the NTN cell.

In some embodiments, the area restriction information includes one or more of the following:
a TN area identifier;
a restricted area list;
restricted frequency point information.

In some embodiments, each entry in the restricted area list includes a reference point parameter and a radius parameter; or, each entry in the restricted area list includes a logical identifier mapped to a fixed area.

In some embodiments, the restricted frequency point information is common restricted frequency point information for performing MDT measurement collection for a serving cell and performing MDT measurement collection for a neighboring cell; or,
the restricted frequency point information includes restricted frequency point information configured for performing MDT measurement collection for the serving cell, and/or restricted frequency point information configured for performing MDT measurement collection for the neighboring cell.

In some embodiments, the time restriction information includes any one of the following:
deadline information for measurement collection;
start time information for measurement collection and the deadline information for measurement collection;
the start time information for measurement collection and duration information for measurement collection.

In some embodiments, the restriction information is one or more sets of restriction information, each set of the restriction information is associated with one or more cells, or each set of the restriction information is associated with one or more tracking areas, or each set of the restriction information is associated with one or more networks.

In some embodiments, the apparatus further includes:
a second receiving unit, configured to receive an MDT measurement collection report sent by the terminal, where the MDT measurement collection report includes one or more of the following:
a type of a serving cell of the terminal when collecting an MDT result;
a satellite identifier of a serving satellite of the terminal when collecting the MDT result;
geographic location information of the terminal when collecting the MDT result;
the MDT configuration information;
a result obtained by the terminal through calculation based on the MDT configuration information.

It should be noted that a division of units in the embodiments of the present disclosure is schematic and is only a logical function division, and there may be other division manners in actual implementation. In addition, the functional units in the embodiments of the present disclosure may be integrated in one processing unit, or each unit may exist physically alone, or two or more units may be integrated in one unit. The above-mentioned integrated unit may be implemented in a form of hardware, or may be implemented in a form of a software functional unit.

If implemented in the form of the software functional unit and sold or used as an independent product, the integrated unit may be stored in a processor-readable storage medium. Based on this understanding, a technical solution of the present disclosure essentially or a part thereof that contributes to the prior art or all or part of the technical solution can be embodied in a form of a software product. The computer software product is stored in a storage medium and includes several instructions for making a computer device (which may be a personal computer, a server, or a network device, etc.) or a processor (processor) execute all or part of steps of the methods in the embodiments of the present disclosure. The aforementioned storage medium includes: a USB flash disk, a mobile hard disk, a read-only memory (Read-Only Memory, ROM), a random access memory (Random Access Memory, RAM), a magnetic disk, an optical disk or other media that can store program codes.

It should be noted here that the above apparatus provided by the embodiments of the present disclosure can implement all the method steps implemented by the above method embodiments, and can achieve the same technical effects. The part of this embodiment and the beneficial effects thereof which are same as the method embodiments will not be described in detail here.

In another aspect, an embodiment of the present disclosure further provides a non-transitory readable storage medium storing a computer program, where the computer program is configured to cause a processor to execute the MDT measurement collection method provided in the foregoing embodiments on a terminal side.

It should be noted herein that the non-transitory readable storage medium provided by the embodiment of the present disclosure can implement all method steps implemented by the foregoing method embodiments on the terminal side and achieve the same technical effects. The part of this embodiment and the beneficial effects thereof which are same as the method embodiments will not be described in detail here.

In another aspect, an embodiment of the present disclosure further provides a non-transitory readable storage medium storing a computer program, where the computer program is configured to cause a processor to execute the MDT configuration method provided in the foregoing embodiments on a network device side.

It should be noted herein that the non-transitory readable storage medium provided by the embodiment of the present disclosure can implement all method steps implemented by the foregoing method embodiments on the network device side and achieve the same technical effects. The part of this embodiment and the beneficial effects thereof which are same as the method embodiments will not be described in detail here.

The non-transitory readable storage medium may be any available medium or data storage device that the computer can access, including but not limited to, a magnetic memory (such as a floppy disk, a hard disk, a magnetic tape, a magneto-optical disk (MO), etc.), an optical memory (such as a CD, a DVD, a BD, an HVD, etc.), and a semiconductor memory (such as a ROM, an EPROM, an EEPROM, a non-volatile memory (NAND FLASH), a solid state disk (SSD)), etc.

The technical solutions provided by the embodiments of the present disclosure can be applied to various systems, especially a 5G system. For example, an applicable system may be a global system of mobile communication (global system of mobile communication, GSM), a code division multiple access (code division multiple access, CDMA) system, a wideband code division multiple access (Wideband Code Division Multiple Access, WCDMA) general packet radio service (general packet radio service, GPRS) system, a long term evolution (long term evolution, LTE) system, an LTE frequency division duplex (frequency division duplex, FDD) system, an LTE time division duplex (time division duplex, TDD) system, a long term evolution advanced (long term evolution advanced, LTE-A) system, a universal mobile system (universal mobile telecommunication system, UMTS), a worldwide interoperability for microwave access (worldwide interoperability for microwave access, WiMAX) system, a 5G new radio (New Radio, NR) system, etc. Each of the various systems includes a terminal device and a network device. The system may also include a core network part, such as an evolved packet system (Evloved Packet System, EPS), a 5G system (5GS), etc.

The terminal device involved in the embodiments of the present disclosure may refer to a device that provides voice and/or data connectivity to a user, a handheld device with a wireless connection function, or other processing devices connected to a wireless modem, etc. The terminal device may vary in name among different systems. For example, in the 5G system, the terminal may be called a user equipment (User Equipment, UE). A wireless terminal device may communicate with one or more core networks (Core Networks, CNs) via a radio access network (Radio Access Network, RAN). The wireless terminal device may be a mobile terminal device, such as a mobile phone (or "cellular" phone) and a computer with a mobile terminal device. For example, the mobile terminal device may be portable, pocket-sized, handheld, computer built-in or vehicle-mounted mobile apparatuses, which exchanges language and/or data with the radio access network, such as a personal communication service (Personal Communication Service, PCS) phone, a cordless phone, a session initiated protocol (Session Initiated Protocol, SIP) phone, a wireless local loop (Wireless Local Loop, WLL) station, a personal digital assistant (Personal Digital Assistant, PDA) and other devices. The wireless terminal device may also be called a system, a subscriber unit (subscriber unit), a subscriber station (subscriber station), a mobile station (mobile station), a mobile (mobile), a remote station (remote station), an access point (access point), a remote terminal device (remote terminal), an access terminal device (access terminal), a user terminal device (user terminal), a user agent (user agent), a user device (user device), which is not limited in the embodiments of the present disclosure.

The network device involved in the embodiments of the present disclosure may be a base station, and the base station may include multiple cells providing services for terminals. Depending on specific applications, the base station may also be called an access point, or a device in an access network that communicates with a wireless terminal device through one or more sectors over an air interface, or other names. The network device may be configured to exchange a received over-the-air frame with an Internet protocol (Internet Protocol, IP) packet, and act as a router between the wireless terminal device and the rest of the access network, where the rest of the access network may include an Internet protocol (IP) communication network. The network device may also coordinate property management of the air interface. For example, the network device involved in the embodiments of the present disclosure may be a network device (Base Transceiver Station, BTS) in a global system for mobile communications (Global System For Mobile Communications, GSM) or code division multiple access (Code Division Multiple Access, CDMA), or a network device (NodeB) in wide-band code division multiple access (Wide-Band Code Division Multiple Access, WCDMA), or an evolutional network device (evolutional Node B, eNB or e-NodeB) in a long term evolution (long term evolution, LTE) system, or a 5G base station (gNB) in a 5G network architecture (next generation system), or may be a home evolved base station (Home evolved Node B, HeNB), a relay node (relay node), a home base station (femto), a pico base station (pico), etc., which is not limited in the embodiments of the present disclosure. In some network structures, the network device may include a centralized unit (centralized unit, CU) node and a distributed unit (distributed unit, DU) node, and the centralized unit and the distributed unit may also be geographically separated.

One or more antennas may be used by the network device and the terminal respectively for multi input multi output (Multi Input Multi Output, MIMO) transmission therebetween, and the MIMO transmission may be single user MIMO (Single User MIMO, SU-MIMO) or multiple user MIMO (Multiple User MIMO, MU-MIMO). Depending on the morphology and number of root antenna combinations, the MIMO transmission may be 2D-MIMO, 3D-MIMO, FD-MIMO or massive-MIMO, and may also be diversity transmission or precoding transmission or beamforming transmission, etc.

It should be understood by those skilled in the art that the embodiments of the present disclosure can be provided as methods, systems or computer program products. Therefore, the present disclosure may take forms of entire-hardware embodiments, entire-software embodiments, or embodiments combining software and hardware aspects. Furthermore, the present disclosure may take a form of a computer program product implemented on computer-usable storage media (including but not limited to a magnetic disk storage, an optical storage, etc.) in which computer-usable program codes are included.

The present disclosure is described with reference to flowcharts and/or block diagrams of methods, apparatuses (systems) and computer program products according to the embodiments of the present disclosure. It should be understood that each flow and/or block in the flowcharts and/or block diagrams, and a combination of flows and/or blocks in the flowcharts and/or block diagrams may be implemented by computer-executable instructions. These computer-executable instructions may be provided to a processor of a general-purpose computer, a special-purpose computer, an embedded processor or other programmable data processing devices to produce a machine, so that an apparatus for implementing functions specified in one or more flows of the flowcharts and/or one or more blocks of the block diagrams is produced by instructions executed by the processor of the computer or other programmable data processing devices.

These processor-executable instructions may also be stored in a processor-readable memory that can guide a computer or other programmable data processing devices to work in a specific way, so that the instructions stored in the processor-readable memory produce a manufactured product including an instruction apparatus, and the instruction apparatus implements functions specified in one or more flows of the flowcharts and/or one or more blocks of the block diagrams.

These processor-executable instructions may also be loaded on a computer or other programmable data processing devices, so that a series of operation steps are executed on the computer or other programmable devices to produce computer-implemented processing, whereby the instructions executed on the computer or other programmable devices provide steps for implementing functions specified in one or more flows of the flowcharts and/or one or more blocks of the block diagrams.

Obviously, those skilled in the art can make various modifications and variations to the present disclosure without departing from the spirit and scope of the present disclosure. Thus, if these modifications and variations of the present disclosure are within the scope of claims of the present disclosure and their equivalent technology, the present disclosure is also intended to include these modifications and variations.

## Claims

1. A minimization of drive test MDT measurement collection method, applied to a terminal, **characterized by** comprising:
receiving MDT configuration information sent by a network device, wherein the MDT configuration information comprises restriction information for MDT measurement collection, and the restriction information comprises at least one of cell type restriction information, area restriction information, or time restriction information;
performing MDT measurement collection based on the MDT configuration information.

2. The MDT measurement collection method according to claim 1, wherein the cell type restriction information comprises one or more of the following indication information:
first indication information, wherein the first indication information is used to indicate that the terminal measures and collects MDT data of a terrestrial network TN cell and/or a non-terrestrial network NTN cell;
second indication information, wherein the second indication information is used to indicate whether the terminal is allowed to measure and collect MDT data of the NTN cell in a case where the terminal camps on or is connected to the TN cell;
third indication information, wherein the third indication information is used to indicate whether the terminal is allowed to measure and collect MDT data of the TN cell in a case where the terminal camps on or is connected to the NTN cell.

3. The MDT measurement collection method according to claim 1, wherein the area restriction information comprises one or more of the following:
a TN area identifier;
a restricted area list;
restricted frequency point information.

4. The MDT measurement collection method according to claim 3, wherein each entry in the restricted area list comprises a reference point parameter and a radius parameter; or, each entry in the restricted area list comprises a logical identifier mapped to a fixed area.

5. The MDT measurement collection method according to claim 3, wherein the restricted frequency point information is common restricted frequency point information for performing MDT measurement collection for a serving cell and performing MDT measurement collection for a neighboring cell; or,
the restricted frequency point information comprises restricted frequency point information configured for performing MDT measurement collection for the serving cell, and/or restricted frequency point information configured for performing MDT measurement collection for the neighboring cell.

6. The MDT measurement collection method according to claim 1, wherein the time restriction information comprises any one of the following:
deadline information for measurement collection;
start time information for measurement collection and the deadline information for measurement collection;
the start time information for measurement collection and duration information for measurement collection.

7. The MDT measurement collection method according to claim 1, wherein the restriction information is one or more sets of restriction information, each set of the restriction information is associated with one or more cells, or each set of the restriction information is associated with one or more tracking areas, or each set of the restriction information is associated with one or more networks.

8. The MDT measurement collection method according to any one of claims 1 to 7, wherein the method further comprises:
reporting an MDT measurement collection report, wherein the MDT measurement collection report comprises one or more of the following:
a type of a serving cell of the terminal when collecting an MDT result;
a satellite identifier of a serving satellite of the terminal when collecting the MDT result;
geographic location information of the terminal when collecting the MDT result;
the MDT configuration information;
a result obtained by the terminal through calculation based on the MDT configuration information.

9. A minimization of drive test MDT configuration method, applied to a network device, **characterized by** comprising:
sending MDT configuration information to a terminal, wherein the MDT configuration information comprises restriction information for MDT measurement collection, and the restriction information comprises at least one of cell type restriction information, area restriction information, or time restriction information.

10. The MDT configuration method according to claim 9, wherein the cell type restriction information comprises one or more of the following indication information:
first indication information, wherein the first indication information is used to indicate that the terminal measures and collects MDT data of a terrestrial network TN cell and/or a non-terrestrial network NTN cell;
second indication information, wherein the second indication information is used to indicate whether the terminal is allowed to measure and collect MDT data of the NTN cell in a case where the terminal camps on or is connected to the TN cell;
third indication information, wherein the third indication information is used to indicate whether the terminal is allowed to measure and collect MDT data of the TN cell in a case where the terminal camps on or is connected to the NTN cell.

11. The MDT configuration method according to claim 9, wherein the area restriction information comprises one or more of the following:
a TN area identifier;
a restricted area list;
restricted frequency point information.

12. The MDT configuration method according to claim 11, wherein each entry in the restricted area list comprises a reference point parameter and a radius parameter; or, each entry in the restricted area list comprises a logical identifier mapped to a fixed area.

13. The MDT configuration method according to claim 11, wherein the restricted frequency point information is common restricted frequency point information for performing MDT measurement collection for a serving cell and performing MDT measurement collection for a neighboring cell; or,
the restricted frequency point information comprises restricted frequency point information configured for performing MDT measurement collection for the serving cell, and/or restricted frequency point information configured for performing MDT measurement collection for the neighboring cell.

14. The MDT configuration method according to claim 9, wherein the time restriction information comprises any one of the following:
deadline information for measurement collection;
start time information for measurement collection and the deadline information for measurement collection;
the start time information for measurement collection and duration information for measurement collection.

15. The MDT configuration method according to claim 9, wherein the restriction information is one or more sets of restriction information, each set of the restriction information is associated with one or more cells, or each set of the restriction information is associated with one or more tracking areas, or each set of the restriction information is associated with one or more networks.

16. The MDT configuration method according to any one of claims 9 to 15, wherein the method further comprises:
receiving an MDT measurement collection report sent by the terminal, wherein the MDT measurement collection report comprises one or more of the following:
a type of a serving cell of the terminal when collecting an MDT result;
a satellite identifier of a serving satellite of the terminal when collecting the MDT result;
geographic location information of the terminal when collecting the MDT result;
the MDT configuration information;
a result obtained by the terminal through calculation based on the MDT configuration information.

17. A terminal, **characterized by** comprising a memory, a transceiver, and a processor;
wherein the memory is configured to store a computer program; the transceiver is configured to transmit and receive data under control of the processor; the processor is configured to read the computer program in the memory and perform the following operations:
receiving minimization of drive test MDT configuration information sent by a network device, wherein the MDT configuration information comprises restriction information for MDT measurement collection, and the restriction information comprises at least one of cell type restriction information, area restriction information, or time restriction information;
performing MDT measurement collection based on the MDT configuration information.

18. The terminal according to claim 17, wherein the cell type restriction information comprises one or more of the following indication information:
first indication information, wherein the first indication information is used to indicate that the terminal measures and collects MDT data of a terrestrial network TN cell and/or a non-terrestrial network NTN cell;
second indication information, wherein the second indication information is used to indicate whether the terminal is allowed to measure and collect MDT data of the NTN cell in a case where the terminal camps on or is connected to the TN cell;
third indication information, wherein the third indication information is used to indicate whether the terminal is allowed to measure and collect MDT data of the TN cell in a case where the terminal camps on or is connected to the NTN cell.

19. The terminal according to claim 17, wherein the area restriction information comprises one or more of the following:
a TN area identifier;
a restricted area list;
restricted frequency point information.

20. The terminal according to claim 19, wherein each entry in the restricted area list comprises a reference point parameter and a radius parameter; or each entry in the restricted area list comprises a logical identifier mapped to a fixed area.

21. The terminal according to claim 19, wherein the restricted frequency point information is common restricted frequency point information for performing MDT measurement collection for a serving cell and performing MDT measurement collection for a neighboring cell; or
the restricted frequency point information comprises restricted frequency point information configured for performing MDT measurement collection for the serving cell, and/or restricted frequency point information configured for performing MDT measurement collection for the neighboring cell.

22. The terminal according to claim 17, wherein the time restriction information comprises any one of the following:
deadline information for measurement collection;
start time information for measurement collection and the deadline information for measurement collection;
the start time information for measurement collection and duration information for measurement collection.

23. The terminal according to claim 17, wherein the restriction information is one or more sets of restriction information, each set of the restriction information is associated with one or more cells, or each set of the restriction information is associated with one or more tracking areas, or each set of the restriction information is associated with one or more networks.

24. The terminal according to any one of claims 17 to 23, wherein the operations further comprise:
reporting an MDT measurement collection report, wherein the MDT measurement collection report comprises one or more of the following:
a type of a serving cell of the terminal when collecting an MDT result;
a satellite identifier of a serving satellite of the terminal when collecting the MDT result;
geographic location information of the terminal when collecting the MDT result;
the MDT configuration information;
a result obtained by the terminal through calculation based on the MDT configuration information.

25. A network device, **characterized by** comprising a memory, a transceiver, and a processor;
the memory is configured to store a computer program; the transceiver is configured to transmit and receive data under control of the processor; the processor is configured to read the computer program in the memory and perform the following operations:
sending minimization of drive test MDT configuration information to a terminal, wherein the MDT configuration information comprises restriction information for MDT measurement collection, and the restriction information comprises at least one of cell type restriction information, area restriction information, or time restriction information.

26. The network device according to claim 25, wherein the cell type restriction information comprises one or more of the following indication information:
first indication information, wherein the first indication information is used to indicate that the terminal measures and collects MDT data of a terrestrial network TN cell and/or a non-terrestrial network NTN cell;
second indication information, wherein the second indication information is used to indicate whether the terminal is allowed to measure and collect MDT data of the NTN cell in a case where the terminal camps on or is connected to the TN cell;
third indication information, wherein the third indication information is used to indicate whether the terminal is allowed to measure and collect MDT data of the TN cell in a case where the terminal camps on or is connected to the NTN cell.

27. The network device according to claim 25, wherein the area restriction information comprises one or more of the following:
a TN area identifier;
a restricted area list;
restricted frequency point information.

28. The network device according to claim 27, wherein each entry in the restricted area list comprises a reference point parameter and a radius parameter; or, each entry in the restricted area list comprises a logical identifier mapped to a fixed area.

29. The network device according to claim 27, wherein the restricted frequency point information is common restricted frequency point information for performing MDT measurement collection for a serving cell and performing MDT measurement collection for a neighboring cell; or
the restricted frequency point information comprises restricted frequency point information configured for performing MDT measurement collection for the serving cell, and/or restricted frequency point information configured for performing MDT measurement collection for the neighboring cell.

30. The network device according to claim 25, wherein the time restriction information comprises any one of the following:
deadline information for measurement collection;
start time information for measurement collection and the deadline information for measurement collection;
the start time information for measurement collection and duration information for measurement collection.

31. The network device according to claim 25, wherein the restriction information is one or more sets of restriction information, each set of the restriction information is associated with one or more cells, or each set of the restriction information is associated with one or more tracking areas, or each set of the restriction information is associated with one or more networks.

32. The network device according to any one of claims 25 to 31, wherein the operations further comprise:
receiving an MDT measurement collection report sent by the terminal, wherein the MDT measurement collection report comprises one or more of the following:
a type of a serving cell of the terminal when collecting an MDT result;
a satellite identifier of a serving satellite of the terminal when collecting the MDT result;
geographic location information of the terminal when collecting the MDT result;
the MDT configuration information;
a result obtained by the terminal through calculation based on the MDT configuration information.

33. A minimization of drive test MDT measurement collection apparatus, **characterized by** comprising:
a first receiving unit, configured to receive MDT configuration information sent by a network device, wherein the MDT configuration information comprises restriction information for MDT measurement collection, and the restriction information comprises at least one of cell type restriction information, area restriction information, or time restriction information;
a measurement collection unit, configured to perform MDT measurement collection based on the MDT configuration information.

34. A minimization of drive test MDT configuration apparatus, **characterized by** comprising:
a sending unit, configured to send MDT configuration information to a terminal, wherein the MDT configuration information comprises restriction information for MDT measurement collection, and the restriction information comprises at least one of cell type restriction information, area restriction information, or time restriction information.

35. A non-transitory readable storage medium, **characterized in that** the non-transitory readable storage medium stores a computer program, and the computer program is configured to cause a processor to perform the method according to any one of claims 1 to 8.

36. A non-transitory readable storage medium, **characterized in that** the non-transitory readable storage medium stores a computer program, and the computer program is configured to cause a processor to perform the method according to any one of claims 9 to 16.
